# EUROPEAN PATENT SPECIFICATION

(11) **EP 3 995 725 B1**
(45) Date of publication and mention of the grant of the patent: **18.06.2025**
(21) Application number: 21216685.4
(22) Date of filing: 04.03.2019
(51) Int. Cl.: F16L 3/10, F16L 55/035

(54) **PIPE CLAMP**
ROHRSCHELLE
COLLIER DE SERRAGE

(30) Priority: 02.03.2018 US 201862637577 P
(43) Date of publication of application: 11.05.2022
(62) Divisional of application: 19160539.3
(73) Proprietor: Erico International Corporation, Solon, OH 44139 (US)
(72) Inventor: OH, Michael Hung-Sun, Twinsburg (US)
(74) Representative: Barker Brettell LLP

(56) References cited:
- EP-A1- 2 113 699
- EP-B1- 2 113 699
- DE-A1- 102015 109 252
- DE-A1- 102015 109 253
- DE-C- 530 599
- DE-C1- 4 431 692

## Description

### BACKGROUND

In many applications, it may be useful to secure pipes relative to support structures. For example, conventional pipe clamps can be configured to be secured to hanging threaded rods or other components to secure associated pipes to beams or other structures.

### SUMMARY

In a first aspect of the invention, there is provided a clamp for securing a pipe using first and second fasteners as defined in claim 1. Optional and/or preferable features are defined in dependent claims 2-12.

In a second aspect of the invention, there is provided a method of installing a pipe in the clamp of claim 1 as defined in claim 13. Optional and/or preferable features are defined in dependent claim 14.

DE102015109253A1 relates to a pipe clamp with two radially outwardly projecting clamping flanges which can be clamped together with a clamping screw passing through them, a first of the two clamping flanges having a laterally open slot for the clamping screw and the second clamping flange has a threaded hole into which the clamping screw is screwed. At the open end of the slot, a stiffening bracket connects the first clamping flange on both sides of the slot.

DE4431692C1 discloses a clamp body which has upper and lower halves, each with a semicircular central section and flat end sections. The halves are secured about a pipe by bolts passing through holes in the flat end sections. The two end sections of the lower half have one closed and one open ended slot respectively. One end section of the upper half has a bolt hole pref. with a fixed nut. The other has a vertical lip at its end with a transverse slot at the corner. This forms a hinge axis for a U-shaped piece place symmetrically through the slot. A bolt screwed into tapped holes in one or both the parallel arms of the U-piece can be swung into the open-ended slot in the lower half, assisted by a return spring at the hinge. The spring can be of rubber.

### BRIEF DESCRIPTION OF THE DRAWINGS

The accompanying drawings, which are incorporated in and form a part of this specification, illustrate embodiments of the invention and, together with the description, serve to explain the principles of embodiments of the invention:
FIG. 1 is a front elevation view of a pipe clamp according to one embodiment of the invention, with the pipe clamp in a closed configuration;
FIG. 2 is a front elevation view of a top clamping member of the pipe clamp of FIG. 1;
FIG. 3 is a top isometric view of the top clamping member of FIG. 2;
FIGS. 4A and 4B are a bottom isometric partial views of first and second ears, respectively, of a bottom clamping member of the pipe clamp of FIG. 1;
FIG. 5 is a front elevation view of the pipe clamp of FIG. 1 in an open configuration, with a non-metallic liner installed;
FIG. 6 is a front elevation view of a pipe clamp according to another embodiment of the invention, with the pipe clamp in a closed configuration;
FIG. 7 is a front elevation view of a bottom clamping member of the pipe clamp of FIG. 6;
FIG. 8 is a bottom isometric view of the bottom clamping member of FIG. 7;
FIG. 9 is a bottom isometric view of an ear of the bottom clamping member of FIG. 7;
FIG. 10 is a bottom isometric view of another ear of the bottom clamping member of FIG. 7;
FIGS. 11 and 12 are front elevation views of the ears of FIGS. 9 and 10, respectively;
FIGS. 13 and 14 are bottom isometric views of the ears of FIGS. 9 and 10, respectively, with the clamp of FIG. 6 in the closed configuration of FIG. 1;
FIG. 15 is a front elevation view of the pipe clamp of FIG. 6 in an open configuration;
FIG. 16 is an isometric view of the pipe clamp of FIG. 6 with a non-metallic liner installed, with the pipe clamp in the closed configuration of FIG. 1;
FIG. 17 is a cross sectional view of the bottom clamping member of the pipe clamp of FIG. 6 and the non-metallic liner of FIG. 16; and
FIG. 18 is a front elevation view of a pipe clamp according to an embodiment not comprised by the invention, with a non-metallic liner installed.

### DETAILED DESCRIPTION

Some of the discussion below describes pipe clamps for use with threaded rods to support pipes of circular cross-section. It will be understood that the context and particulars of this discussion are presented as examples only. For example, embodiments of the disclosed pipe clamps can be used to secure non-circular pipes or other non-pipe objects, and can be used to secure pipes relative to structures without necessarily using threaded rods.

As used herein, directional terms including "top," "bottom," "side," "horizontal," "vertical," and so on are used to indicate directional relationships with respect to an arbitrary reference frame (e.g., a reference frame of a particular figure or figures). These directional terms are used consistently relative to a particular embodiment. For example, a "top" feature of an embodiment is opposite a corresponding "bottom" feature, and a "horizontal" feature generally extends perpendicularly to a "vertical" feature. However, unless otherwise defined or limited, these directional terms are not intended to indicate an absolute reference frame for a particular pipe clamp or installation. For example, in some installations or embodiments, a "horizontal" feature of a pipe clamp, while generally perpendicular to a "vertical" feature of the pipe clamp, may not necessarily extend in a strictly horizontal direction relative to ground. Similarly, in some installations or embodiments, a "bottom" feature of a pipe clamp may not necessarily be disposed below a "top" feature of the pipe clamp relative to the direction of gravity.

As noted above, it may be useful to configure pipe clamps to secure pipes (or other round objects) relative to other structures. In some cases, it may be useful to provide a pipe clamp that can be disposed in an open configuration in order to install a pipe, including while the pipe clamp is secured to a structure and is thus restricted in lateral or axial movement. For example, it may be useful to provide a pipe clamp that can be hung from a threaded rod, then opened, without full disassembly of the pipe clamp (i.e., while leaving all of the components of the pipe clamp secured together), in order to install within the pipe clamp a pipe that is already partially suspended by other devices. In general, it may also be useful to provide pipe clamps that exhibit substantial loading capabilities, such as may be indicated by standardized load rating testing (e.g., as determined based on testing under standards promulgated by RAL Deutsches Institut für Gütesicherung und Kennzeichnung E.V. ("RAL Standards")), and that also provide appropriate acoustic dampening. Some embodiments of the invention can provide one or more of these benefits, as well as other benefits not expressly noted above.

Some embodiments of the invention can include pipe clamps that can be easily opened to relatively large angles without full disassembly of the pipe clamps. This may be useful, for example, to install pipe into a pipe clamp without disassembling the pipe clamp into multiple loose pieces. In some embodiments, in this regard, an ear on a bottom clamping member of a pipe clamp can include a mounting surface on which a fastener (e.g., a screw) is to be seated and an installation tab that extends at an angle from the mounting surface. Further, an elongate slot can extend along at least part of the mounting surface and at least part of the installation tab (e.g., from the mounting surface onto the installation tab). Accordingly, when an opposite ear of the pipe clamp is released relative to a counterpart (top) clamping member, the elongate slot can provide substantial freedom of movement for the fastener, and for the bottom clamping member relative to the fastener. Accordingly, the engagement of the elongate slot with the fastener can allow the bottom clamping member to pivot away from a top clamping member without the fastener being removed from either the top or the bottom clamping member.

Moreover, in some embodiments, with the pipe clamp in a fully opened configuration, the installation tab can engage a head (or other feature) of the fastener to suspend the bottom clamping member from the top clamping member with the bottom clamping member open, relative to the top clamping member at a relatively large angle. For example, in some embodiments, an installation tab can allow a bottom clamping member to hang open at an angle of between approximately 60 degrees and approximately 90 degrees, or between approximately 80 degrees and approximately 90 degrees, relative to a horizontal (or other) reference. This may be useful, for example, in order to allow relatively large pipes to be installed into the clamp member, while the bottom and top clamping members are still secured together.

Some embodiments of the invention can include pipe clamps that exhibit increased load ratings and other beneficial structural aspects, as compared to conventional pipe clamps. For example, in some embodiments, an ear on a bottom clamping member of a pipe clamp can include a mounting portion with a substantially planar surface and with a recessed seat that deviates from (e.g., extends into) the substantially planar surface. In some embodiments, the recessed seat can be a round seat extruded into the mounting portion, such as may usefully receive a circular head of a screw or other similar feature of a fastener. In some embodiments, the recessed seat can include a seating surface on which the screw head (or other fastener feature) seats, with the seating surface extending at an angle relative to the substantially planar surface of the mounting feature. In some embodiments, the angle can be approximately 8 degrees, or another non-zero angle less than approximately 10 degrees.

Some embodiments of the invention can combine some or all of the features noted above, or others. For example, some embodiments can include a pipe clamp with a recessed seat on one or more ears of a clamping member, as well as one or more elongate slots extending into the one or more recessed seats, or any sub-combination of these features. Similarly, some embodiments can include a pipe clamp with a recessed seat on an ear of a clamping member, an installation tab extending at an angle from a mounting portion of the ear, and an elongate slot extending into the recessed seat and onto the installation tab, or any sub-combination of these features.

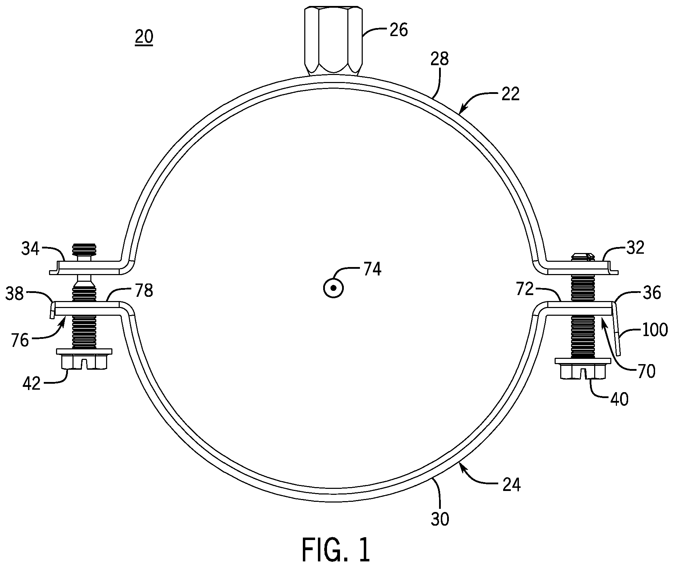

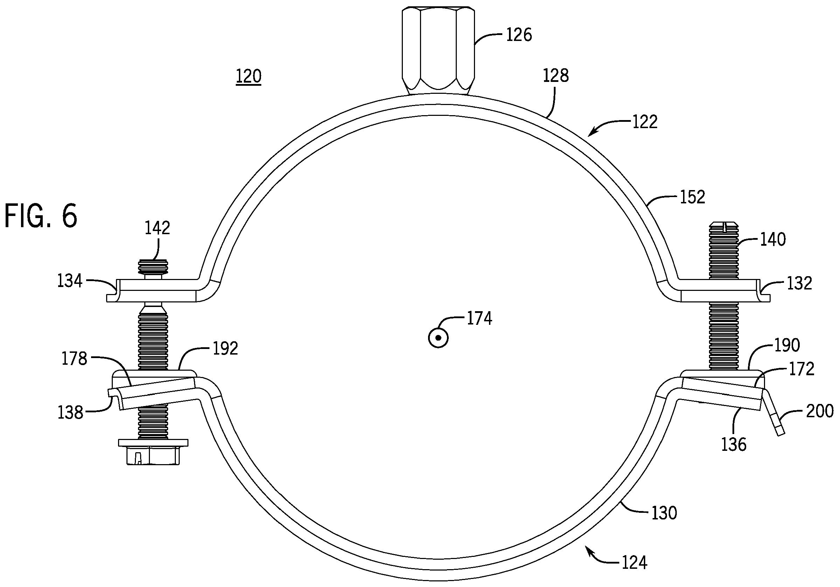

FIG. 1 illustrates an example pipe clamp 20 according to an embodiment of the invention. The pipe clamp 20 includes a first clamping member 22, a second clamping member 24, and a securement 26 configured to secure the first clamping member 22 to a threaded rod (see FIG. 6) or other structural feature.

The first and second clamping members 22, 24 include respective clamping portions 28, 30 that are configured as arcuate features that can surround, engage, and support a pipe (not shown). In some embodiments, each of the clamping portions 28, 30 can exhibit a substantially semi-circular internal profile. In other embodiments, other geometries are possible. For example, one or both of the clamping portions 28, 30 may exhibit a substantially circular profile, but may extend over an arc of less than 180°. In this regard, for example, the clamping members 22, 24 may be spaced apart from each other even when a pipe is securely clamped between them.

The first and second clamping members 22, 24 also include respective sets of ears 32, 34 and 36, 38 that are configured to collectively engage a set of fasteners 40, 42 in order to secure the clamping portions 28, 30 together. In particular, in the embodiment illustrated, the ears 32, 36 are configured to be secured together using the fastener 40, which is configured, for example, as a hex-headed screw. Likewise, the ears 34, 38 are configured to be secured together using the fastener 42, which is configured, for example, as a hex-headed toggle screw. In other embodiments, other configurations for the ears 32, 34, 36, 38 or for the fasteners 40, 42 are possible.

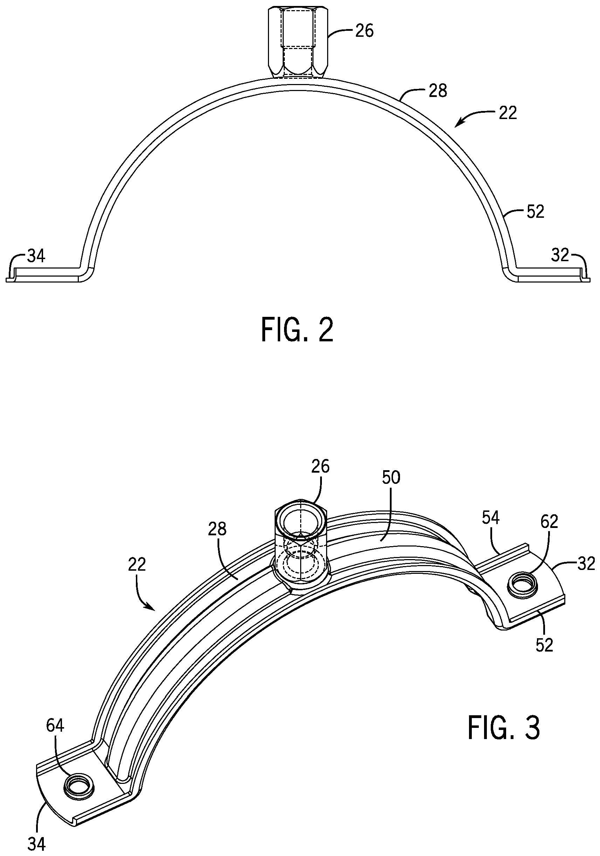

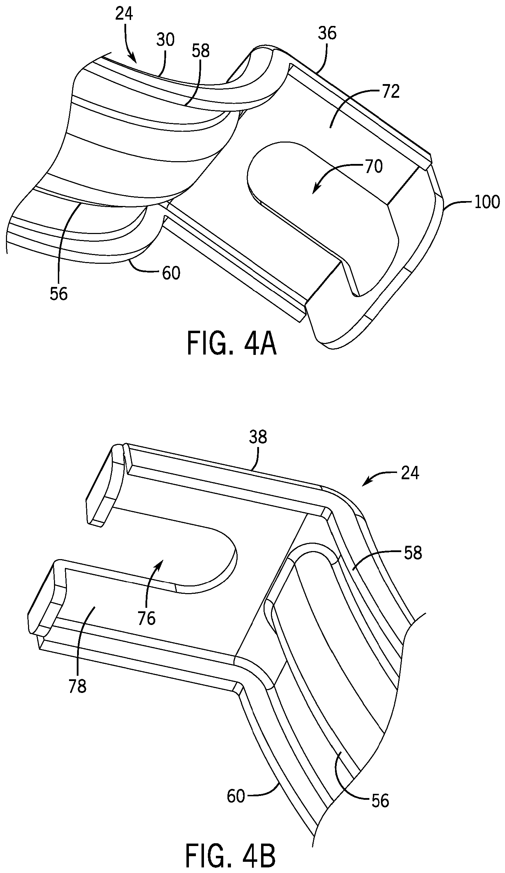

In some embodiments, strengthening features, such as one or more ribs and one or more peripheral flanges can be included. As illustrated in FIG. 3, for example, the first clamping member 22 includes a central rib 50 and a set of peripheral flanges 52, 54. The central rib 50 extends along the entire profile of the clamping portion 28 and corresponds to a central groove (not shown in FIG. 3) that is opposite the clamping portion 28, inside of the pipe clamp 20 (i.e., on the inner or pipe side of the first clamping member 22). In the embodiment illustrated, the central rib 50 does not extend onto the ears 32, 34, 36, 38, although other configurations are possible. In contrast, the peripheral flanges 52, 54, in the embodiment illustrated, extend along the entire profile of the clamping portion 28 and over substantially the full radially-extending length of the ears 32, 34. A similar central rib 56 and similar peripheral flanges 58, 60 are also included on the second clamping member 24, as partially illustrated in FIGS. 4A and 4B.

Generally, the central ribs 50, 56 and the peripheral flanges 52, 54, 58, 60 can provide increased strength to the clamping members 22, 24. The peripheral flanges 52, 54, 58, 60 in particular can provide significant strength to the ears 32, 34, 36, 38, as well as to the clamping portions 28, 30, so that the deflection of the ears 32, 34, 36, 38 may be relatively minimal when the pipe clamp 20 is appropriately secured around a pipe and appropriately loaded. This can be useful, for example, not only to generally increase the strength of the pipe clamp 20 but also to minimize bending stresses on the fasteners 40, 42. For example, when the clamping members 22, 24 are firmly secured around a pipe (not shown), the relative lack of deflection of the ears 32, 34, 36, 38 can help to ensure that the fasteners 40, 42 are substantially subjected only to tension loading. As a result, smaller sizes of the fasteners 40, 42 can be used than may be possible with conventional arrangements, with corresponding benefits with regard to cost, reliability, and weight.

In different embodiments, the ribs 50, 56 and the flanges 52, 54, 58, 60 can exhibit different absolute and relative dimensions. In some embodiments, for example, the depth of the flanges 52, 54, 58, 60 (i.e., as measured vertically from the perspective of FIG. 1) can be one and one-half to two times (or more) than the thickness of the material (e.g., metal) used to form the clamping members 22, 24. In some embodiments, for example, the depth of the ribs 50, 56 can be the same, or less than, the depth of the flanges 52, 54, 58, 60. In some embodiments, for example, the width of the ribs 50, 56 (i.e., as measured into the page from the perspective of FIG. 1) can be more than half of the width of the clamping members 22, 24. In some embodiments, for example, the width of the ribs 50, 56 can be more than seven times the thickness of the material used to form the clamping members 22, 24. In some embodiments, these relative dimensions can also be usefully employed on other clamps according to the invention.

As also illustrated in FIG. 3, each of the ears 32, 34 includes an extruded, threaded boss 62, 64, each defining a mounting opening for a respective one of the fasteners 40, 42. As partially illustrated in FIG. 1, a thinner toggle portion of the shaft of the fastener 42 can be aligned with the boss 64 to allow the fastener 42 to be pivoted relative to the ear 34.

In some embodiments, the ears 36, 38 of the second clamping member 24 can include elongate slots that can allow a degree of lateral and pivotal relative movement between the clamping member 24 and the fasteners 40, 42. As shown in FIG. 4A, for example, a closed slot 70 can be provided on a substantially planar mounting portion 72 of the ear 36, with the slot 70 extending generally perpendicularly relative to a pipe axis 74 defined by the pipe clamp 20 (see, e.g., FIG. 1) and, along the main portion of the ear 36, radially outwardly from the clamping portion 30. The closed slot 70 can be configured to receive the fastener 40 (see, e.g., FIG. 1), and to thereby continue to secure the clamping portion 30 to the clamping portion 28 even when the pipe clamp 20 is in an open configuration.

In some embodiments, as shown in FIG. 4B, an open slot 76 can be provided on a substantially planar mounting portion 78 of the ear 38, with the slot 76 also extending generally perpendicularly to the pipe axis 74 (see FIG. 1). This may be useful, for example, in order to allow the fastener 42 to be pivoted into or out of the slot 76 and, thereby, into or out of engagement with the clamping member 24, without removing the fastener 42 from the clamping member 22 (see FIG. 1). Bent tabs at the radially outer end of the ear 38 can then help to secure the fastener 42 against slipping out of the slot 76, once the fastener 42 has been appropriately tightened, thereby providing a secure closure of the pipe clamp 20 generally.

In some embodiments, additional features can be provided in order to further assist with installation of a pipe into the pipe clamp 20. As also illustrated in FIG. 4A, for example, an installation tab 100 extends from the mounting portion 72 of the ear 36 at a non-zero angle relative to the mounting portion 72. In the illustrated embodiment, the installation tab 100 extends at an angle of between approximately 90 degrees and approximately 95 degrees, although other configurations are possible.

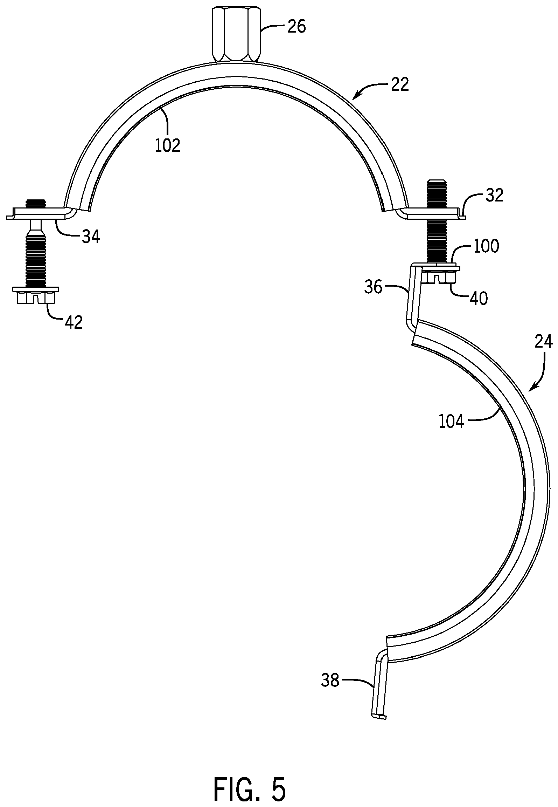

In addition to the noted features, the closed slot 70 also extends from the mounting portion 72 of the ear 36 onto the installation tab 100. Accordingly, when the pipe clamp 20 is fully opened (see FIG. 5), the clamping member 24 can be disposed so that the shaft of the fastener 40 extends through the portion of the slot 70 that is on the installation tab 100. Thus, for example, the installation tab 100 can support the clamping member 24 at an open angle of approximately 90 degrees (e.g., as measured in comparison between a first reference plane extending along the ears 32, 34 and a second reference plane extending along the ears 36, 38). This relatively large open angle can be useful, for example, so that relatively large pipes, such as for ventilation, can be relatively easily installed without requiring full disassembly of the pipe clamp 20 (i.e., while allowing the clamping members 22, 24 and the fasteners 40, 42 to remain connected as a single assembly). In some cases, this arrangement can usefully allow the pipe clamp 20 to be readily installed onto pipes that have already been suspended in a desired location, or otherwise usefully deployed.

In some embodiments, liners can be employed in order to improve characteristics of pipe clamp performance. In the configuration illustrated in FIG. 5, for example, two liner parts 102, 104 of a generally non-metallic liner have been installed on the clamping portions 28, 30 of the clamping members 22, 24, respectively. The liner parts 102, 104 can be formed primarily from rubber, other elastomers, or other polymers, and can help to secure pipes in the pipe clamp 20 or to provide acoustic dampening. In some embodiments, the liner parts 102, 104 can also increase the load rating of the pipe clamp 20 as compared to arrangements in which conventional liners are used, including as described in detail below. Of course, in some arrangements, such as shown in FIG. 1, the pipe clamp 20 and other clamps disclosed herein can be used without liners.

FIG. 6 illustrates another example pipe clamp 120 according to an embodiment of the invention. In general, many aspects of the pipe clamp 120 are similar to those of the pipe clamp 20, as discussed above. For example, the pipe clamp 120 includes a first clamping member 122, a second clamping member 124, and a securement 126 configured to secure the first clamping member 122 to a threaded rod (not shown) or other structural feature.

Likewise, the first and second clamping members 122, 124 include respective clamping portions 128, 130 that are configured as arcuate features that can surround, engage, and support a pipe (not shown). In the embodiment illustrated, the clamping portions 128, 130 each exhibit a substantially circular internal profile, extending over an appropriate arc length. In other embodiments, however, other geometries are possible.

The first and second clamping members 122, 124 also include sets of ears 132, 134, 136, 138 that are configured to collectively engage a set of fasteners 140, 142 to secure the clamping portions 128, 130 together. In particular, in the embodiment illustrated, the ears 132, 136 are configured to be secured together using the fastener 140, which is configured, for example, as a hex-headed screw. Likewise, the ears 134, 138 are configured to be secured together using the fastener 142, which is configured, for example, as a hex-headed toggle screw. In other embodiments, other configurations for the ears 132, 134, 136, 138 and the fasteners 140, 142 are possible.

In some embodiments, including as illustrated in FIG. 6, the clamping portions 128, 130 may be configured to provide substantially continuous contact with the pipe along the first and second clamping portions. In this regard, for example, as also noted above, the clamping portions 128, 130 may trace substantially circular arcs (e.g., at rest, or when tightened onto a pipe), but may extend over respective arcs of less than 180°. Accordingly, when the clamping portions 128, 130 are appropriately engaged to support a pipe, the opposing sets of ears 132, 136 and 134, 138 may be aligned with each other to receive the respective fasteners 140, 142, but may be spaced apart from each other (e.g., spaced tangentially, relative to the pipe) so as not to be in direct contact with each other. This may be useful, for example, in order to ensure appropriately secure engagement of the pipe by the clamping portions 128, 130 and by the pipe clamp 120 in general. For example, because the ears 132, 136 and 134, 138 are configured not to contact each other when a pipe is appropriately secured, the risk of under-tightening of the pipe clamp 120 due to contact between the ears 132, 136 and 134, 138 can be avoided. Of course, in some cases, similar principles (e.g., geometry of clamping portions and spacing of ears) can be employed in other embodiments disclosed herein.

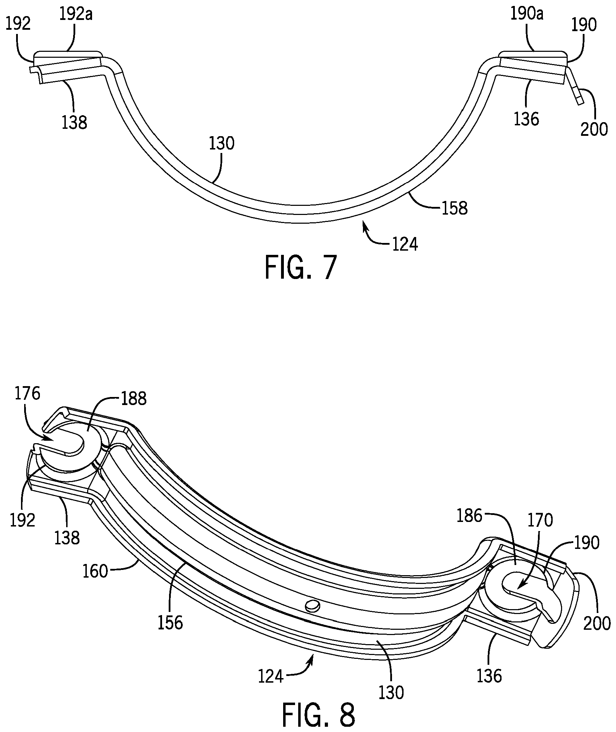

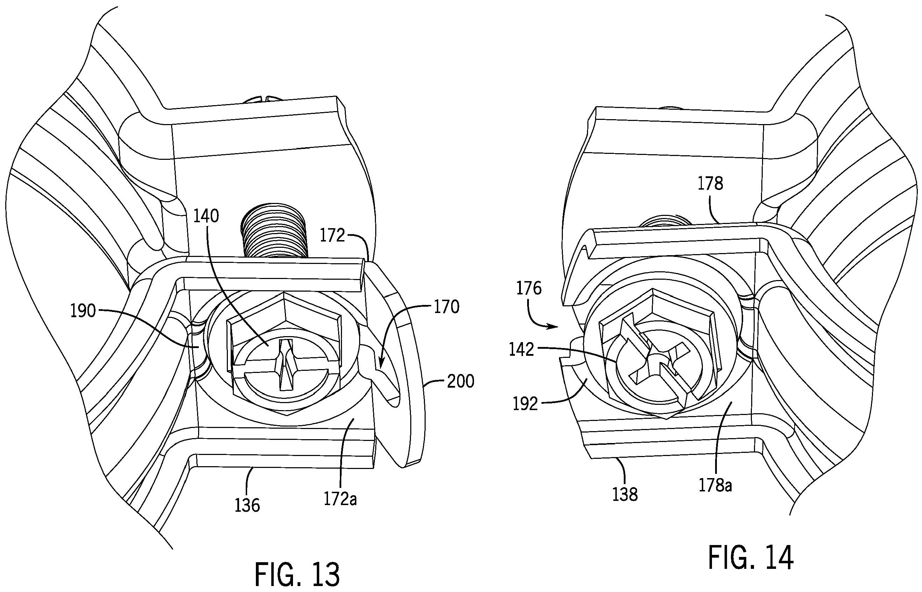

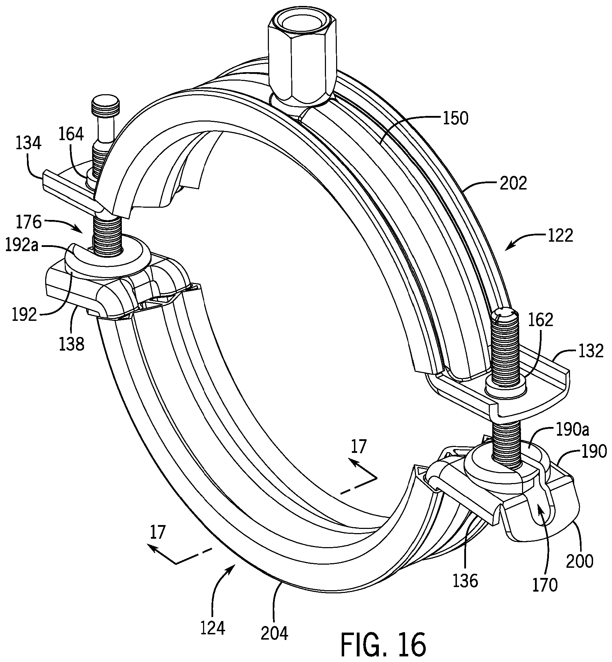

Also similarly to the pipe clamp 20, the pipe clamp 120 can include ribs and flanges to provide increased structural strength or other benefits. For example, as illustrated in FIG. 8 in particular, the second clamping member 124 includes a central rib 156 and a set of peripheral flanges 158, 160. The central rib 156 extends along the entire profile of the clamping portion 130 and corresponds to a central groove (not shown in FIG. 13) that is opposite the clamping portion 130 inside of the pipe clamp 120 (i.e., on the inner side of the first clamping member 124) In the embodiment illustrated, the central rib 156 does not extend onto the ears 132, 134, 136, 138, although other configurations are possible. In contrast, the peripheral flanges 158, 160 extend along the entire profile of the clamping portion 130 as well as over substantially the full radially-extending length of the ears 136, 138. A similar central rib 150 and similar peripheral flanges 152, 154 are also included on the first clamping member 122, as partially illustrated in FIGS. 6 and 16.

Generally, the central ribs 150, 156 and the peripheral flanges 152, 154, 158, 160 can provide increased strength to the clamping members 122, 124. The peripheral flanges 152, 154, 158, 160 in particular can provide significant strength to the ears 132, 134, 136, 138, as well as to the clamping portions 128, 130, so that the deflection of the ears 132, 134, 136, 138 is relatively minimal when the pipe clamp 120 is loaded. This can be useful, for example, not only to generally increase the strength of the pipe clamp 120 but also to minimize bending stresses on the fasteners 140, 142. For example, when the clamping members 122, 124 are firmly secured around a pipe (not shown), the relative lack of deflection of the ears 132, 134, 136, 138 can help to ensure that the fasteners 140, 142 are substantially subjected only to tension loading.

In different embodiments, the ribs 150, 156 and the flanges 152, 154, 158, 160 can exhibit different absolute and relative dimensions. In some embodiments, for example, the depth of the flanges 152, 154, 158, 160 (i.e., as measured vertically from the perspective of FIG. 6) can be two times or more than the thickness of the material (e.g., metal) used to form the clamping members 122, 124. In some embodiments, for example, the depth of the ribs 150, 156 can be less than the depth of the flanges 152, 154, 158, 160. In some embodiments, for example, the width of the ribs 150, 156 (i.e., as measured into the page from the perspective of FIG. 6) can be more than half of the width of the clamping members 122, 124. In some embodiments, for example, the width of the ribs 150, 156 can be more than seven times the thickness of the material used to form the clamping members 122, 124.

Similarly to the clamping member 22, each of the ears 132, 134 of the clamping member 122 includes an extruded, threaded boss 162, 164 (see FIG. 16), each defining a mounting opening for a respective one of the fasteners 140, 142. As partially illustrated in FIG. 6, a thinner toggle portion of the shaft of the fastener 142 can be aligned with the boss on the ear 134 to allow the fastener 142 to be pivoted relative to the ear 134.

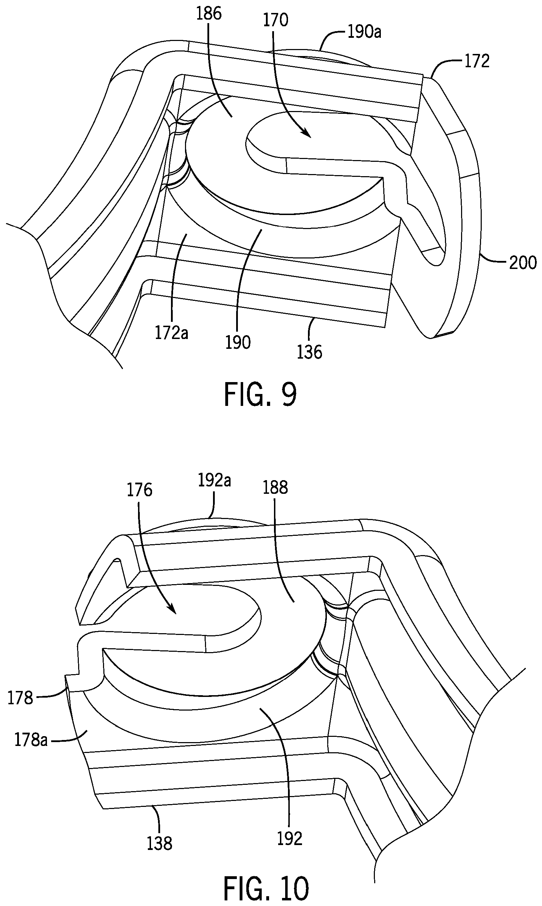

In some embodiments, as illustrated in FIGS. 8-10 in particular, the ears 136, 138 of the second clamping member 124 can include elongate slots that can allow a degree of lateral and pivotal relative movement between the clamping member 124 and the fasteners 140, 142. As illustrated in FIGS. 8 and 9, for example, a closed slot 170 is provided on a mounting portion 172 of the ear 136, with the slot 170 extending generally perpendicularly relative to a pipe axis 174 defined by the pipe clamp 120 (see, e.g., FIG. 6) and, along the main portion of the ear 136, radially outwardly from the clamping portion 130. The closed slot 170 can be configured to receive the fastener 140, and to thereby continue to secure the clamping portion 130 to the clamping portion 128 even when the pipe clamp 120 is in an open configuration.

In some embodiments, an open slot can be provided. As illustrated in FIG. 8, for example, and similarly to the open slot 76 discussed above, an open slot 176 is provided on a mounting portion 178 of the ear 138, with the slot 176 also extending generally perpendicularly to the pipe axis 174 (see FIG. 6). This may be useful, for example, in order to allow the fastener 142 to be pivoted into or out of the slot and, thereby, into or out of engagement with the clamping member 124, without removing the fastener 142 from the clamping member 122.

In some embodiments, additional features can be provided to strengthen the ears of a pipe clamp or provide other benefits. As illustrated in FIGS. 8-12, for example, each of the ears 136, 138 includes a respective recessed seat 190, 192 that defines a deviation from a substantially planar surface 172a, 178a of mounting portions 172, 178 of the ears 136, 138. In the illustrated embodiment, the recessed seats 190, 192 are substantially circular, although other configurations are possible.

Also in the embodiment illustrated, the slots 170, 176 extend substantially into the recessed seats 190, 192. As such, as illustrated in FIGS. 13 and 14 in particular, when the fasteners 140, 142 are tightened to secure the clamping members 122, 124 around a pipe (not shown), heads of the fasteners 140, 142 can seat against seating surfaces 186, 188 at the interior of seating portions 190a, 192a of the recessed seats 190, 192 (see, e.g., FIGS. 9 and 10 for the seating surfaces 186, 188), with shafts of the fasteners 140, 142 extending through the slots 170, 176. This can be useful, for example, to further increase the strength of the ears 136, 138 as well as to help to prevent the fasteners 140, 142 from becoming dislodged from the ears 136, 138, such as when the pipe clamp 120 is subjected to particularly large, potentially deforming loads. Moreover, the arrangement of the slots 170, 176, as similarly discussed relative to the slots 70, 76, can allow for ready pivoting of the pipe clamp 120 between open and closed configurations, without disassembly of the fasteners 140, 142 or the pipe clamp 120 generally.

A recessed seat, such as the recessed seats 190, 192, can be formed in different ways and with different absolute and relative geometries. In the embodiment illustrated, for example, the recessed seats 190, 192 are formed as extrusions into the substantially planar surfaces 172a, 178a of the mounting portions 172, 178 of the ears 136, 138, with substantially planar seating surfaces 186, 188. In other embodiments, other configurations are possible.

In some embodiments, seating surfaces within a seating recess (or seating recesses in general) can be angularly offset from parts of the ears on which they are formed. For example, as illustrated in FIGS. 9-12 in particular, the seating portions 190a, 192a and the seating surfaces 186, 188 of the recessed seats 190, 192 do not extend in parallel with the substantially planar surfaces 172a, 178a of the mounting portions 172, 178 of the ears 136, 138. Rather, the seating portions 190a, 192a and the seating surfaces 186, 188 extend at a relatively small angle as measured relative to the substantially planar surfaces 172a, 178a. This may be useful, for example, in order to further help to retain the heads of the fasteners 140, 142 within the recessed seats 190, 192. For example, due to the noted angular deviation, the recessed seats 190, 192 are somewhat deeper towards the radially exterior ends of the ears 136, 138 (i.e., farther from the pipe) than towards the radially interior ends of the ears 136, 138 (i.e., closer to the pipe). Accordingly, near the radially exterior ends of the ears 136, 138, each of the recessed seats 190, 192 provides a relatively large internal lip. These internal lips can provide a structural impediment to help prevent the heads of the fasteners 140, 142 from slipping out of the recessed seats 190, 192, even if loading of the pipe clamp 20 causes an adverse deflection of the ears 136, 138.

Additionally, as also discussed above, some configurations of the disclosed pipe clamp can be arranged so that the opposing sets of ears of the clamping members are tangentially spaced from each other when a pipe is appropriately secured. With this configuration, for example, as illustrated in FIG. 6 as well as **FIGS. 13** and 14, the non-parallel configuration of the mounting portions of the ears relative to the seating portions of recessed seats can help to ensure appropriate engagement of the ears by the relevant fasteners. For example, the angular offset of the seating portions relative to the mounting portions 172, 178 can ensure that heads of nuts and the associated bolts are appropriately aligned for optimal loading. Further, this arrangement can allow a tightening of the relevant fasteners to cause the associated ears to deflect slightly towards each other. This can provide increasingly strong tactile feedback to consumers to indicate appropriate installation, and can also, via a levering action, help to provide a tighter engagement of the pipe by the clamping portions as compared to conventional designs. This can also apply, for example, when a liner is used (e.g., as discussed below).

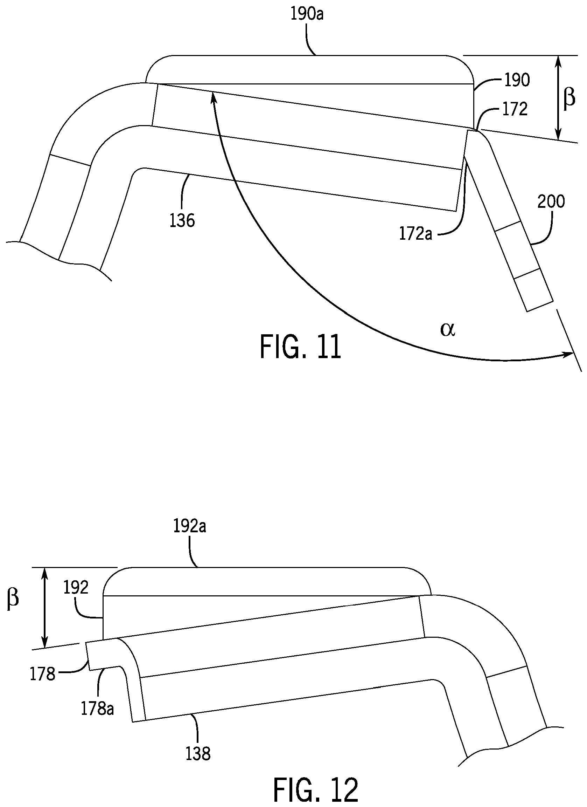

In different embodiments, different angular deviations for recessed seats can be provided. In the embodiment illustrated, for example, as shown in FIGS. 11 and 12 in particular, the seating portions 190a, 192a and the seating surfaces 186, 188 of the recessed seats 190, 192 extend at an angle □ of approximately 8 degrees relative to the substantially planar surfaces 172a, 178a of the mounting portions 172, 178 of the ears 134, 136. In other embodiments, other configurations are possible, including a range of angles less than or equal to approximately 10 degrees. In some embodiments, different angles can be provided for the seating portion 190a as compared to the seating surface 186 than for the seating portion 192a as compared to the seating surface 188. In some embodiments, different angles can be provided for the seating surface 186 as compared to the seating surface 188 or for the seating portion 190a as compared to the seating portion 192a.

As another example, as shown in FIG. 6 in particular, the seating portions 190a, 192a extend substantially horizontally (in the illustrated reference frame), or otherwise substantially in parallel with the ears 132, 134, when the clamping members 124 are in an un-deformed state. Correspondingly, the substantially planar surfaces 172a, 178a of the mounting portions 172, 178 of the ears 134, 136 extend at angles of approximately 8 degrees below horizontal (in the illustrated reference frame) when the clamping member 124 is in the illustrated installed orientation. In other embodiments, other configurations are possible. Of particular note, as also alluded to above, with the seating portions 190a, 192a substantially in parallel with the ears 132, 134, appropriate loading of the fasteners 140, 142 can be readily obtained.

In some embodiments, a recessed seat can be formed so that a fastener can rotate relatively freely when secured therein. For example, as illustrated in FIGS. 13 and 14 in particular, the recessed seats 190, 192 are formed as generally circular recesses with characteristic diameters that are sufficiently large so that the heads of the fasteners 140, 142 can rotate freely therein. This may be useful, for example, so that a user can secure a clamp around a pipe by rotating a fastener from either side of the clamp (e.g., at the head of a bolt, at a nut for the bolt, or both). Further, this arrangement can allow for relatively easy use of a variety of different fasteners with the same pipe clamp, as well as a reversed configuration, with a nuts rather than bolt heads seated within the recessed seats 190, 192.

In some embodiments, additional features can be provided in order to further assist with installation of pipe into the pipe clamp 120. As also illustrated in FIG. 11, for example, an installation tab 200 extends from the mounting portion 172 of the ear 138 at an angle □□ Although a variety of angles are possible, the illustrate embodiment beneficially exhibits an angle □ of between approximately 115 degrees and approximately 125 degrees (e.g., at an angle of approximately 120 degrees), as measured from the substantially planar surface 136a.

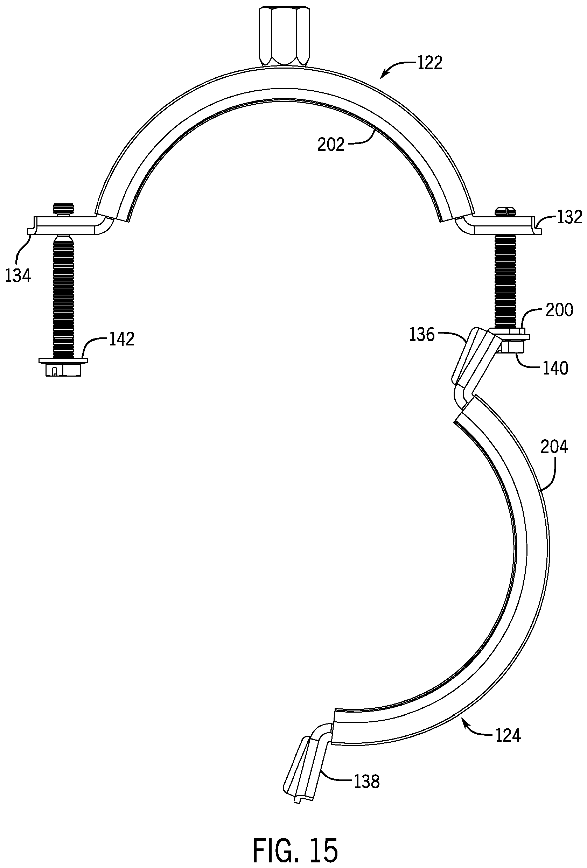

In addition to the noted features, the closed slot 170 also extends from the mounting portion 172 of the ear 138 onto the installation tab 200. Accordingly, as similarly discussed relative to the slot 70, the pipe clamp 120 can be opened to a relatively large angle without full disassembly (e.g., with the fastener 140 still secured to the two ears 136, 132. For example, as illustrated in FIG. 15 in particular, the shaft of the fastener 140 can be disposed in the portion of the slot 170 that is on the installation tab 200 when the pipe clamp 120 is fully opened. And the installation tab 200 can thereby support the clamping member 124 at an open angle of between approximately 55 degrees and approximately 65 degrees (e.g., approximately 60 degrees, as measured in comparison between a first reference plane extending along the ears 132, 134 and a second reference plane extending along the ears 136, 138). This relatively large open angle can be useful, for example, so that relatively large pipes can be relatively easily installed without requiring full disassembly of the pipe clamp 120 (i.e., while allowing the clamping members 122, 124 and the fasteners 140, 142 to remain connected as a single assembly). In some cases, this arrangement can usefully allow the pipe clamp 20 to be readily installed onto pipes that have already been suspended in a desired location, or otherwise usefully deployed. In other embodiments, other configurations are possible. For example, in some embodiments, an installation tab similar to the installation tab 200 can be provided in the absence of recessed seats such as the recessed seats 19 PIPE CLAMP

0 192. Similarly, in some embodiments, recessed seats such as the recessed seats 190, 192 can be provided in the absence of an installation tab. In some embodiments in which an installation tab is provided along with recessed seats, an angle of approximately 120 degrees for the installation tab, relative to a reference plane of a relevant mounting portion of a clamping member, may be particularly beneficial. For example, an angle of approximately 120 degrees of deviation may provide appropriate clearance for installation of the head of a fastener into the proximate recessed seat, while also providing relatively minimal additional length for the relevant ear, in order to allow for relatively close spacing between adjacently installed pipes.

As with other embodiments, in some configurations, liners can be used with the pipe clamp 120. In the configuration illustrated in FIGS. 15 and 16, for example, liner parts 202, 204 of a generally non-metallic liner have been installed on the clamping portions 128, 130 of the clamping members 122, 124, respectively. The liner parts 202, 204 can be formed primarily from rubber, other elastomers, or other polymers, and can help to secure pipes in the pipe clamp 120 or to provide acoustic dampening. In some embodiments, the liner parts 202, 204 can also increase the load rating of the pipe clamp 120 as compared to arrangements in which conventional liner parts are used. Of course, in some arrangements, such as shown in FIG. 6, liner parts may not be used with the pipe clamp 120.

In some embodiments, liner parts for a pipe clamp, including liner parts as discussed above, can be formed with relatively thin non-metallic walls that enclose one or more hollow internal compartments. This may be useful, for example, in order to help to improve overall load ratings of a pipe, such as may be determined under RAL standards or other standardized testing, as well as to improve acoustic dampening.

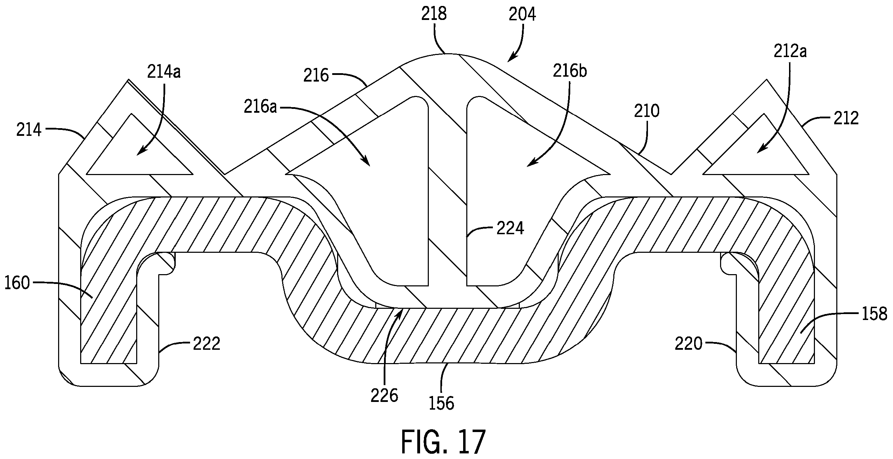

As illustrated in FIG. 17, for example, the liner part 204, which may be substantially geometrically similar to the liner parts 102, 104, 202, exhibits relatively thin external walls 210 that define two hollow peripheral ridges 212, 214, an expanded central region 216 with a central peak 218, and a set of return lips 220, 222. The external walls 210 accordingly also define two hollow internal compartments 212a, 214a within the ridges 212, 214 and, in combination with an internal wall 224, a set of hollow internal compartments 216a, 216b within the central region 216.

As illustrated in FIG. 17 in particular, the return lips 220, 222 are configured to engage peripheral flanges on a clamping member, such as the peripheral flanges 158, 160 on the clamping member 124 (see also FIG. 6). This can, for example, help to secure the liner part 204 on the clamping member 124 during transport as well as during installation of a pipe.

Also as illustrated in FIG. 17 in particular, the central region 216, including portions of the hollow internal compartments 216a, 216b, can extend into a groove on a clamping member, such as a central groove 226 defined by the central rib 150 of the clamping member 124. This can, for example, also help to secure the liner part 204 on the clamping member 124 as well as help to provide other benefits discussed below.

In some cases, internal compartments, such as the various internal compartments 216a, 216b, can contribute to substantial acoustic dampening. Further, a relatively thin configuration of external walls, such as the external walls 210, can contribute to improved load ratings for a pipe clamp, as compared to arrangements in which conventional liners are used. For example, the relatively thin external walls 210, as potentially modulated by the hollow internal compartments 212a, 214a, 216a, 216b, can deform relatively significantly upon initial application of pre-loading to the liner part 204, but then resist significant deformation upon application of further loads. Further, in some structural tests, such as tests under the RAL Standards, a reference deflection for determining a load rating is measured after application of a pre-load. Accordingly, the noted initial susceptibility and subsequent resistance to deformation, as exhibited by liners according to embodiments of the invention, can result in relatively significant improvements in actual load ratings. Further, hollow internal compartments, such as the hollow internal compartments 212a, 214a, 216a, 216b, as defined by the external walls 210 and the internal wall 224, can provide relatively significant acoustic dampening, which may potentially counter any loss of dampening resulting from the relatively thin aspect of the external walls 210.

In different embodiments, liner parts can exhibit different configurations. In the illustrated embodiment, for example, the central region 216 of the liner part 204 exhibits a generally diamond-shaped profile, with the two internal compartments 216a, 216b, lateral vertices of the diamond that are configured to extend wider than the central groove 226 on the clamping member 124, and a somewhat flattened vertex that is configured to seat within the central groove 226. Likewise, the peripheral ridges 212, 214 exhibit substantially triangular profiles and are disposed at the lateral edges of the liner part 204 (from the perspective of FIG. 17) in substantial alignment with the return lips 220, 222. Further, in the embodiment illustrated, the external walls 210 and the internal wall 224 can exhibit thicknesses of between approximately 0.7 mm and approximately 1 mm. In other embodiments, however, other configurations are possible.

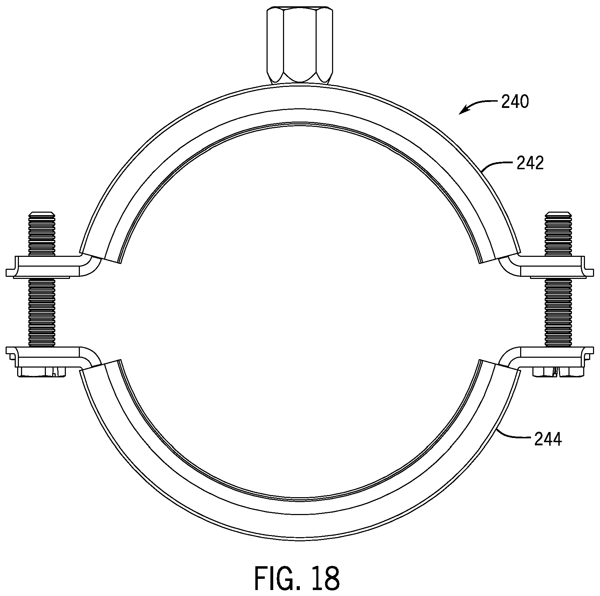

In some embodiments, liner parts similar to the liner part 204, or otherwise configured, can be used with differently configured pipe clamps. For example, a pipe clamp 240 illustrated in FIG. 18 can be used with liner parts 242, 244 that are substantially geometrically similar to the liner part 204 (see, e.g., FIG. 17). In some ways, the pipe clamp 240 can be similar to the pipe clamps 20, 120. For example, the pipe clamp 240 can exhibit closed or open slots (not shown), peripheral flanges, central ribs (not shown), threaded bosses (not shown) and other features similar to the pipe clamps 20, 120. In other ways, the pipe clamp 240 can vary from the pipe clamps 20, 20. For example, in the embodiment illustrated, the pipe clamp 240 does not include an installation tab similar to the installation tabs 100, 200 (see, e.g., FIGS. 1 and 6).

Thus, embodiments of the inventions provide an improved clamp for supporting pipes relative to other structures. In some embodiments, for example, an installation tab can facilitate a relatively large opening angle for a pipe clamp without requiring the pipe clamp to be fully disassembled. As another example, in some embodiments, recessed seats on ears of a clamping member can provide improved structural strength for a pipe clamp, as well as helping to retain relevant fasteners in place after installation. As still another example, in some embodiments, non-metallic liner parts with relatively thin walls and internal hollow compartments can help to increase load ratings for a pipe clamp, as well as to provide relatively significant acoustic dampening.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention as defined in the appended claims.

## Claims

1. A clamp (120) for securing a pipe using first and second fasteners (142, 140), the clamp comprising:
a first clamping member (122) and a second clamping member (124);
each clamping member (122, 124) including a respective clamping portion (128, 130) configured to engage the pipe, and a respective set of ears (132, 134, 136, 138);
the ears (132, 134, 136, 138) of each of the clamping members (122, 124) extending from opposite sides of the respective clamping portion (128, 130), with a first ear (132, 136) being configured to receive the first fastener (140) and a second ear (134, 138) being configured to receive the second fastener (142), to secure the first and second clamping members (122, 124) together;
the first ear (136) of the second clamping member (124) including a mounting portion (172) that includes a recessed seat (190) that is shaped to receive a head of the first fastener (140) and a closed slot (170) that extends through a surface of the first ear (136) in an elongate direction away from the clamping portion (130) and extends into the recessed seat (190) to allow the second clamping member (124) to move relative to the first clamping member (122) between a closed configuration and an open configuration, the recessed seat (190) providing a seating portion (190a) with a seating surface (186) to seat a head of the first fastener (140) to secure the first clamping member (122) in the closed configuration;
the first ear (136) including an installation tab (200) extending from the mounting portion (172) at a non-zero-angle relative to the mounting portion (172), and the closed slot (170) extending from the mounting portion (172) onto the installation tab (200) to allow the second clamping member (124) to move relative to the first clamping member (122) between the closed configuration and the open configuration, while the first clamping member (122) and the second clamping member (124) remain connected by the first fastener (140).

2. The clamp of claim 1, wherein the seating portion (190a) is angularly offset relative to the mounting portion (172) such that the recessed seat (190) is deeper at a radially exterior end of the first ear (136) than at a radially interior end of the first ear (136).

3. The clamp of either of claims 1 or 2, wherein the recessed seat (190) is configured as a circular recess that is sized to allow the head of the first fastener (140) to rotate freely therein.

4. The clamp of any of the preceding claims, wherein the recessed seat (190) is recessed into a substantially planar surface (172a) of the mounting portion (172) towards the first clamping member (122) in the closed configuration and the seating surface (186) is angularly offset from the substantially planar surface (172a).

5. The clamp of any of preceding claims 2-4, wherein the recessed seat (190) defines an internal lip near the radially exterior end of the first ear (136), wherein the internal lip is configured to prevent the head of the first fastener (140) from slipping out of the recessed seat (190).

6. The clamp of any of the preceding claims, wherein the second ear (138) includes a second recessed seat (192) sized to receive a head of the second fastener (142) and an open slot (176) on a mounting portion (178) of the second ear (138), wherein the open slot (176) extends in an elongate direction away from the clamping portion (130), from within the second recessed seat (192) to an open end on the second ear (138) opposite the clamping portion (130), to receive the second fastener (142) into the second recessed seat (192).

7. The clamp of any of the preceding claims, wherein the installation tab (200) supports the second clamping member (124) in the open configuration, with the first fastener (140) extending through a portion of the closed slot (170) on the installation tab (200), and
wherein the recessed seat (190) supports the second clamping member (124) in the closed configuration, with the first fastener (140) extending through a portion of the closed slot (170) on the recessed seat (190) so that the head of the first fastener (140) is seated against the seating surface (186).

8. The clamp of any of the preceding claims, wherein the installation tab (200) extends away from the recessed seat (190) at an angle that is between 90 degrees and 95 degrees or between 115 degrees and 125 degrees.

9. The clamp of any of the preceding claims, wherein the installation tab (200) extends from an edge of the recessed seat (190).

10. The clamp of any of the preceding claims, wherein the seating surface (186) is substantially planar and is angled at less than approximately 10 degrees relative to the surface (172a) of the mounting portion (172).

11. The clamp of claim 10, wherein the seating surface (186) is angled at approximately 8 degrees relative to the surface (172a) of the mounting portion (172).

12. The clamp of any of the preceding claims, wherein the second ear (138) includes a mounting portion (178) having a recessed seat (192) with a seating surface (188) that is parallel to the seating surface (186) of the first ear (136).

13. A method of installing a pipe in the clamp (120) of claim 1, the method comprising:
supporting the second clamping member (124) relative to the first clamping member (122) with the clamp (120) in an open configuration, in which the second clamping member (124) is supported by the first clamping member (122) via the first fastener (140) that is inserted through the first ear (132) of the first clamping member (122) and through a portion of the closed slot (170) that extends into the recessed seat (190) on the mounting portion (172) of the first ear (136) of the second clamping member (124), whereby, with the second fastener (142) disengaged from securing the second ear (138) of the second clamping member (124) to the second ear (134) of the first clamping member (122), the first fastener (140) is movable out of the recessed seat (190) and along the closed slot (170) to a portion of the closed slot (170) that is on the installation tab (200) of the second clamping member (124) to place the clamp (120) in the open configuration;
positioning the pipe between clamping portions (128, 130) of the first and second clamping members (122, 124);
without disengaging the first fastener (140) from the first and second clamping members (122, 124), moving the second clamping member (124) toward the first clamping member (122) to place the clamp (120) in a closed configuration; and
securing the clamp (120) in the closed configuration with the clamping portions (128, 130) around the pipe, with:
a head of the first fastener (140) seated in the recessed seat (190) to secure the first clamping member (122) to the second clamping member (124); and
a head of the second fastener (142) seated in a recessed seat (192) of the second ear (138) of the second clamping member (124) to further secure the second clamping member (124) to the first clamping member (122).

14. The method of claim 13, further comprising:
to secure the clamp (120) in the closed configuration, moving the second fastener (142) toward the first and second clamping portions (128, 130) into an elongate slot (176) that extends along the second ear (138) into the recessed seat (192) of the second ear (138).

## Patentansprüche

1. Klemme (120) zum Sichern eines Rohrs unter Verwendung eines ersten und eines zweiten Befestigungselements (142, 140), die Klemme umfassend:
ein erstes Klemmelement (122) und ein zweites Klemmelement (124);
wobei jedes Klemmelement (122, 124) einen jeweiligen Klemmabschnitt (128, 130) einschließt, der konfiguriert ist, um das Rohr in Eingriff zu bringen, und ein jeweiligen Satz Laschen (132, 134, 136, 138);
die Laschen (132, 134, 136, 138) jedes der Klemmelemente (122, 124) sich von gegenüberliegenden Seiten des jeweiligen Klemmabschnitts (128, 130) erstrecken, wobei eine erste Lasche (132, 136) konfiguriert ist, um das erste Befestigungselement (140) aufzunehmen, und eine zweite Lasche (134, 138) konfiguriert ist, um das zweite Befestigungselement (142) aufzunehmen, um das erste und das zweite Klemmelement (122, 124) aneinander zu befestigen;
die erste Lasche (136) des zweiten Klemmelements (124) einen Montageabschnitt (172) einschließt, der einen vertieften Sitz (190) einschließt, der so geformt ist, dass er einen Kopf des ersten Befestigungselements (140) aufnehmen kann, und einen geschlossenen Schlitz (170), der sich durch eine Oberfläche der ersten Lasche (136) in einer länglichen Richtung vom Klemmabschnitt (130) weg erstreckt und sich in den vertieften Sitz (190) hinein erstreckt, damit sich das zweite Klemmelement (124) relativ zum ersten Klemmelement (122) zwischen einer geschlossenen und einer offenen Konfiguration bewegen kann, der vertiefte Sitz (190) einen Sitzabschnitt (190a) mit einer Sitzoberfläche (186) bereitstellt, um einen Kopf des ersten Befestigungselements (140) aufzunehmen, um das erste Klemmelement (122) in der geschlossenen Konfiguration zu sichern;
die erste Lasche (136) eine Installationslasche (200) einschließt, die sich von dem Montageabschnitt (172) in einem Winkel ungleich Null relativ zu dem Montageabschnitt (172) erstreckt, und der geschlossene Schlitz (170) sich vom Montageabschnitt (172) auf die Installationslasche (200) erstreckt, um es dem zweiten Klemmelement (124) zu ermöglichen, sich relativ zum ersten Klemmelement (122) zwischen der geschlossenen Konfiguration und der offenen Konfiguration zu bewegen, während das erste Klemmelement (122) und das zweite Klemmelement (124) durch das erste Befestigungselement (140) verbunden bleiben.

2. Klemme nach Anspruch 1, wobei der Sitzabschnitt (190a) in Bezug auf den Montageabschnitt (172) winkelversetzt ist, so dass der vertiefte Sitz (190) an einem radial äußeren Ende der ersten Lasche (136) tiefer ist als an einem radial inneren Ende der ersten Lasche (136).

3. Klemme nach Anspruch 1 oder 2, wobei der vertiefte Sitz (190) als kreisförmige Vertiefung konfiguriert ist, die so bemessen ist, dass sich der Kopf des ersten Befestigungselements (140) darin frei drehen kann.

4. Klemme nach einem der vorstehenden Ansprüche, wobei der vertiefte Sitz (190) in eine im Wesentlichen ebene Fläche (172a) des Montageabschnitts (172) in Richtung des ersten Klemmelements (122) in der geschlossenen Konfiguration vertieft ist und die Sitzfläche (186) in einem Winkel von der im Wesentlichen ebenen Oberfläche (172a) versetzt ist.

5. Klemme nach einem der vorstehenden Ansprüche 2-4, wobei der vertiefte Sitz (190) eine innere Lippe nahe dem radial äußeren Ende der ersten Lasche (136) definiert, wobei die innere Lippe konfiguriert ist, um zu verhindern, dass der Kopf des ersten Befestigungselements (140) aus dem vertieften Sitz (190) herausrutscht.

6. Klemme nach einem der vorstehenden Ansprüche, wobei die zweite Lasche (138) einen zweiten vertieften Sitz (192), die so bemessen ist, dass sie einen Kopf des zweiten Befestigungselements (142) aufnehmen kann, und einen offenen Schlitz (176) an einem Montageabschnitt (178) der zweiten Lasche (138) einschließt, wobei sich der offene Schlitz (176) in einer länglichen Richtung von dem Klemmabschnitt (130), von innerhalb des zweiten vertieften Sitzes (192) zu einem offenen Ende an der zweiten Lasche (138) gegenüber dem Klemmabschnitt (130), weg erstreckt, um das zweite Befestigungselement (142) in dem zweiten vertieften Sitz (192) aufzunehmen.

7. Klemme nach einem der vorstehenden Ansprüche, wobei die Installationslasche (200) das zweite Klemmelement (124) in der offenen Konfiguration stützt, wobei sich das erste Befestigungselement (140) durch einen Teil des geschlossenen Schlitzes (170) an der Installationslasche (200) erstreckt, und
wobei der vertiefte Sitz (190) das zweite Klemmelement (124) in der geschlossenen Konfiguration stützt, wobei sich das erste Befestigungselement (140) durch einen Teil des geschlossenen Schlitzes (170) auf dem vertieften Sitz (190) erstreckt, so dass der Kopf des ersten Befestigungselements (140) an der Sitzfläche (186) anliegt.

8. Klemme nach einem der vorstehenden Ansprüche, wobei sich die Installationslasche (200) in einem Winkel von 90 Grad bis 95 Grad oder 115 Grad bis 125 Grad von dem vertieften Sitz (190) weg erstreckt.

9. Klemme nach einem der vorstehenden Ansprüche, wobei sich die Installationslasche (200) von einer Kante des vertieften Sitzes (190) erstreckt.

10. Klemme nach einem der vorstehenden Ansprüche, wobei die Sitzfläche (186) im Wesentlichen eben ist und in einem Winkel von weniger als etwa 10 Grad relativ zur Oberfläche (172a) des Montageabschnitts (172) angeordnet ist.

11. Klemme nach Anspruch 10, wobei die Sitzfläche (186) in einem Winkel von etwa 8 Grad relativ zur Oberfläche (172a) des Montageabschnitts (172) angeordnet ist.

12. Klemme nach einem der vorstehenden Ansprüche, wobei die zweite Lasche (138) einen Montageabschnitt (178) mit einem vertieften Sitz (192) mit einer Sitzfläche (188) einschließt, die parallel zur Sitzfläche (186) der ersten Lasche (136) verläuft.

13. Verfahren zum Installieren eines Rohrs in der Klemme (120) nach Anspruch 1, das Verfahren umfassend:
Stützen des zweiten Klemmelements (124) relativ zum ersten Klemmelement (122) mit der Klemme (120) in einer offenen Konfiguration, bei der das zweite Klemmelement (124) durch das erste Klemmelement (122) über das erste Befestigungselement (140) gestützt wird, das durch die erste Lasche (132) des ersten Klemmelements (122) und durch einen Abschnitt des geschlossenen Schlitzes (170) eingesetzt ist, der sich in den vertieften Sitz (190) auf dem Montageabschnitt (172) der ersten Lasche (136) des zweiten Klemmelements (124) erstreckt, wobei, wenn das zweite Befestigungselement (142) von der Sicherung der zweiten Lasche (138) des zweiten Klemmelements (124) an dem zweiten Lasche (134) des ersten Klemmelements (122) gelöst ist, das erste Befestigungselement (140) aus dem vertieften Sitz (190) und entlang des geschlossenen Schlitzes (170) zu einem Abschnitt des geschlossenen Schlitzes (170) bewegbar ist, der sich auf der Installationslasche (200) des zweiten Klemmelements (124) befindet, um die Klemme (120) in die offene Konfiguration zu bringen;
Positionieren des Rohrs zwischen Klemmabschnitten (128, 130) des ersten und zweiten Klemmelements (122, 124);
ohne die erste Befestigung (140) von dem ersten und zweiten Klemmelement (122, 124) zu lösen, Bewegen des zweiten Klemmelements (124) in Richtung des ersten Klemmelements (122), um die Klemme (120) in eine geschlossene Konfiguration zu bringen; und
Sichern der Klemme (120) in der geschlossenen Konfiguration mit den Klemmabschnitten (128, 130) um das Rohr herum, mit:
ein Kopf des ersten Befestigungselements (140), der in der vertiefte Sitz (190) sitzt, um das erste Klemmelement (122) am zweiten Klemmelement (124) zu befestigen; und
ein Kopf des zweiten Befestigungselements (142), der in einem ausgesparten Sitz (192) der zweiten Lasche (138) des zweiten Klemmelements (124) sitzt, um das zweite Klemmelement (124) weiter am ersten Klemmelement (122) zu befestigen.

14. Verfahren nach Anspruch 13, weiter umfassend:
um die Klemme (120) in der geschlossenen Konfiguration zu sichern, Bewegen des zweiten Befestigungselements (142) in Richtung des ersten und zweiten Klemmabschnitts (128, 130) in einen länglichen Schlitz (176), der sich entlang der zweiten Lasche (138) in den vertieften Sitz (192) der zweiten Lasche (138) erstreckt.

## Revendications

1. Dispositif de serrage (120) destiné à fixer un tuyau en utilisant des première et seconde fixations (142, 140), le dispositif de serrage comprenant :
un premier élément de serrage (122) et un second élément de serrage (124) ;
chaque élément de serrage (122, 124) incluant une partie de serrage respective (128, 130) configurée pour venir en prise avec le tuyau, et un ensemble respectif de pattes (132, 134, 136, 138) ;
les pattes (132, 134, 136, 138) de chacun des éléments de serrage (122, 124) s'étendant à partir de côtés opposés de la partie de serrage respective (128, 130), avec une première patte (132, 136) qui est configurée pour recevoir la première fixation (140) et une seconde patte (134, 138) qui est configurée pour recevoir la seconde fixation (142), pour fixer ensemble les premier et second éléments de serrage (122, 124) ;
la première patte (136) du second élément de serrage (124) incluant une partie de montage (172) qui inclut une assise évidée (190) qui est formée pour recevoir une tête de la première fixation (140) et une fente fermée (170) qui s'étend à travers une surface de la première patte (136) dans une direction de prolongement à distance de la partie de serrage (130) et s'étend dans l'assise évidée (190) pour permettre au second élément de serrage (124) de se déplacer par rapport au premier élément de serrage (122) entre une configuration fermée et une configuration ouverte, l'assise évidée (190) fournissant une partie d'assise (190a) avec une surface d'assise (186) pour faire siéger une tête de la première fixation (140) pour fixer le premier élément de serrage (122) dans la configuration fermée ;
la première patte (136) incluant une languette d'installation (200) s'étendant à partir de la partie de montage (172) à un angle non nul par rapport à la partie de montage (172), et la fente fermée (170) s'étendant à partir de la partie de montage (172) sur la languette d'installation (200) pour permettre au second élément de serrage (124) de se déplacer par rapport au premier élément de serrage (122) entre la configuration fermée et la configuration ouverte, tandis que le premier élément de serrage (122) et le second élément de serrage (124) restent reliés par la première fixation (140).

2. Dispositif de serrage selon la revendication 1, dans lequel la partie d'assise (190a) est décalée de manière angulaire par rapport à la partie de montage (172) de telle sorte que l'assise évidée (190) est plus profonde à une extrémité radialement extérieure de la première patte (136) qu'à une extrémité radialement intérieure de la première patte (136).

3. Dispositif de serrage selon l'une ou l'autre des revendications 1 ou 2, dans lequel l'assise évidée (190) est configurée sous la forme d'un évidement circulaire qui est dimensionné pour permettre à la tête de la première fixation (140) de tourner librement à l'intérieur.

4. Dispositif de serrage selon l'une quelconque des revendications précédentes, dans lequel l'assise évidée (190) est évidée dans une surface sensiblement plane (172a) de la partie de montage (172) vers le premier élément de serrage (122) dans la configuration fermée et la surface d'assise (186) est décalée de manière angulaire par rapport à la surface sensiblement plane (172a).

5. Dispositif de serrage selon l'une quelconque des revendications précédentes 2 à 4, dans lequel l'assise évidée (190) définit une lèvre interne à proximité de l'extrémité radialement extérieure de la première patte (136), dans lequel la lèvre interne est configurée pour empêcher la tête de la première fixation (140) de glisser en dehors de l'assise évidée (190).

6. Dispositif de serrage selon l'une quelconque des revendications précédentes, dans lequel la seconde patte (138) inclut une seconde assise évidée (192) dimensionnée pour recevoir une tête de la seconde fixation (142) et une fente ouverte (176) sur une partie de montage (178) de la seconde patte (138), dans lequel la fente ouverte (176) s'étend dans une direction de prolongement à distance de la partie de serrage (130), depuis l'intérieur de la seconde assise évidée (192) vers une extrémité ouverte sur la seconde patte (138) de manière opposée à la partie de serrage (130), pour recevoir la seconde fixation (142) dans la seconde assise évidée (192).

7. Dispositif de serrage selon l'une quelconque des revendications précédentes, dans lequel la languette d'installation (200) supporte le second élément de serrage (124) dans la configuration ouverte, avec la première fixation (140) s'étendant à travers une partie de la fente fermée (170) sur la languette d'installation (200), et
dans lequel l'assise évidée (190) supporte le second élément de serrage (124) dans la configuration fermée, avec la première fixation (140) s'étendant à travers une partie de la fente fermée (170) sur l'assise évidée (190) de sorte que la tête de la première fixation (140) siège contre la surface d'assise (186).

8. Dispositif de serrage selon l'une quelconque des revendications précédentes, dans lequel la languette d'installation (200) s'étend à distance de l'assise évidée (190) à un angle qui est entre 90 degrés et 95 degrés ou entre 115 degrés et 125 degrés.

9. Dispositif de serrage selon l'une quelconque des revendications précédentes, dans lequel la languette d'installation (200) s'étend à partir d'un bord de l'assise évidée (190).

10. Dispositif de serrage selon l'une quelconque des revendications précédentes, dans lequel la surface d'assise (186) est sensiblement plane et à un angle inférieur à environ 10 degrés par rapport à la surface (172a) de la partie de montage (172).

11. Dispositif de serrage selon la revendication 10, dans lequel la surface d'assise (186) est à un angle d'environ 8 degrés par rapport à la surface (172a) de la partie de montage (172).

12. Dispositif de serrage selon l'une quelconque des revendications précédentes, dans lequel la seconde patte (138) inclut une partie de montage (178) présentant une assise évidée (192) avec une surface d'assise (188) qui est parallèle à la surface d'assise (186) de la première patte (136).

13. Procédé destiné à installer un tuyau dans le dispositif de serrage (120) selon la revendication 1, le procédé comprenant :
supporter le second élément de serrage (124) par rapport au premier élément de serrage (122) avec le dispositif de serrage (120) dans une configuration ouverte, où le second élément de serrage (124) est supporté par le premier élément de serrage (122) par le biais de la première fixation (140) qui est insérée à travers la première patte (132) du premier élément de serrage (122) et à travers une partie de la fente fermée (170) qui s'étend dans l'assise évidée (190) sur la partie de montage (172) de la première patte (136) du second élément de serrage (124), moyennant quoi, avec la seconde fixation (142) désengagée de la fixation de la seconde patte (138) du second élément de serrage (124) par rapport à la seconde patte (134) du premier élément de serrage (122), la première fixation (140) peut se déplacer en dehors de l'assise évidée (190) et le long de la fente fermée (170) vers une partie de la fente fermée (170) qui est sur la languette d'installation (200) du second élément de serrage (124) pour placer le dispositif de serrage (120) dans la configuration ouverte ;
positionner le tuyau entre des parties de serrage (128, 130) des premier et second éléments de serrage (122, 124) ;
sans désengager la première fixation (140) des premier et second éléments de serrage (122, 124), déplacer le second élément de serrage (124) vers le premier élément de serrage (122) pour placer le dispositif de serrage (120) dans une configuration fermée ; et
fixer le dispositif de serrage (120) dans la configuration fermée avec les parties de serrage (128, 130) autour du tuyau, avec :
une tête de la première fixation (140) qui siège dans l'assise évidée (190) pour fixer le premier élément de serrage (122) au second élément de serrage (124) ; et
une tête de la seconde fixation (142) qui siège dans une assise évidée (192) de la seconde patte (138) du second élément de serrage (124) pour fixer à nouveau le second élément de serrage (124) au premier élément de serrage (122).

14. Procédé selon la revendication 13, comprenant en outre :
pour fixer le dispositif de serrage (120) dans la configuration fermée, déplacer la seconde fixation (142) vers les première et seconde parties de serrage (128, 130) dans une fente allongée (176) qui s'étend le long de la seconde patte (138) dans l'assise évidée (192) de la seconde patte (138).
